# EUROPÄISCHE PATENTSCHRIFT

(11) **EP 3 325 959 B1**
(45) Veröffentlichungstag und Bekanntmachung des Hinweises auf die Patenterteilung: **26.03.2025**
(21) Anmeldenummer: 16744693.9
(22) Anmeldetag: 21.07.2016
(51) Int. Cl.: G01N 27/416, G01N 27/30, B23K 35/02, B23K 35/36, C01C 1/16, C01F 7/54

(54) **HERSTELLUNG VON FLUORHALTIGEN VERBINDUNGEN MIT HILFE EINER ELEKTROCHEMISCHEN MESSKETTE**
PRODUCTION OF FLUORINE-CONTAINING COMPOUNDS BY USING AN ELECTROCHEMICAL MEASUREMENT CHAIN
PRODUCTION DE COMPOSÉS FLUORITIQUES A L'AIDE D'UNE CHAINE DE MESURE ELECTROCHIMIQUE

(30) Priorität: 21.07.2015 EP 15177757
(43) Veröffentlichungstag der Anmeldung: 30.05.2018
(73) Patentinhaber: Solvay SA, 1120 Bruxelles (BE); Gaskatel Gesellschaft für Gassysteme durch Katalyse und Elektrochemie mbH, 34127 Kassel (DE)
(72) Erfinder: KOHNKE, Hans-Joachim, 34131 Kassel, Bad Wilhelmshöhe (DE); PERNICE, Holger, 28790 Schwanewede (DE); BECKER, Andreas, 29331 Lachendorf (DE); LACROIX, Marc, 1348 Ottignies - Louvain-la-Neuve (BE)
(74) Vertreter: Kraus & Lederer PartGmbB
(86) Internationale Anmeldenummer: PCT/EP2016/067412
(87) Internationale Veröffentlichungsnummer: WO 2017/013207

(56) Entgegenhaltungen:
- DE-A1- 102011 113 941
- DE-A1- 19 845 758
- GB-A- 2 179 931
- US-A- 3 649 473
- US-A- 4 560 540

## Beschreibung

Die vorliegende Erfindung betrifft Verfahren zur Herstellung von fluorhaltigen Verbindungen mittels Fällungsreaktionen aus Fluoridionen enthaltenden Lösungen wobei der pH-Wert mit Hilfe einer elektrochemischen Messkette bestimmt wird.

Chemische Fällungsreaktionen zur Herstellung von fluorhaltigen Verbindungen werden in großem Maße industriell eingesetzt. Häufig wird dabei der pH-Wert im Laufe der Fällungsreaktion überwacht und mit Hilfe des pH-Wertes beispielsweise über die weitere Zugabe eines Eduktes entschieden.

Bisher wird diese Überwachung meist mit Hilfe eines pH-Papiers und visueller Kontrolle desselben vorgenommen. Nachteilig bei diesem Verfahren ist, dass es nicht kontinuierlich erfolgen kann und dass das Messergebnis vom Farbeindruck des Betrachters, den Lichteinflüssen sowie dem Zeitpunkt des Ablesens abhängen kann.

Die Verwendung von Glaselektroden zur pH-Messung ist ebenfalls nicht praktikabel, da diese für den Einsatz in Fluoridionen enthaltenden Medien ungeeignet sind.

US 3649473 beschreibt ein Verfahren zur Bestimmung des Wasserstoffgehalts bei Hochtemperatur-Flüssigkeiten unter der Verwendung von Wasserstoffgasdiffusionselektroden.

Aufgabe der vorliegenden Erfindung ist die Bereitstellung von verbesserten Verfahren zur Herstellung von fluorhaltigen Verbindungen mittels Fällungsreaktionen aus Fluoridionen enthaltenden Lösungen. Vorteilhaft kann dabei der pH-Wert während der Fällungsreaktion genauer überwacht werden. Des Weiteren führen die erfindungsgemäßen Verfahren zu einer höheren Ausbeute des jeweiligen Produkts, zu einer verbesserten Reinheit des Produkts, zu einer verbesserten Reproduzierbarkeit der Verfahren und/oder zu einer Einsparung der eingesetzten Menge mindestens eines der Edukte. Des Weiteren führen die erfindungsgemäßen Verfahren zu vorteilhaften physikochemischen Eigenschaften des jeweiligen Produkts, beispielsweise hinsichtlich der Korngröße, der Filtrierbarkeit, des Schmelzpunkts und/oder der Lagerbeständigkeit.

Diese und andere Aufgaben wurden durch die vorliegende Erfindung gelöst.

Entsprechend betrifft ein erster Gegenstand der vorliegenden Erfindung ein Verfahren zur Herstellung einer fluorhaltigen Verbindung durch eine Fällungsreaktion wobei die fluorhaltige Verbindung aus einem Reaktionsmedium gefällt wird und dass man während des Verlaufs der Fällungsreaktion den pH-Wert des Reaktionsmediums mit Hilfe einer elektrochemischen Messkette bestimmt, wobei die elektrochemische Messkette eine elektrochemische Messkette enthaltend eine Wasserstoffdiffusionselektrode als Indikatorelektrode und mindestens eine Referenzelektrode ist, und die Elektroden eine konstruktive Einheit mit einem Gehäuse mit einem Auslauf bilden, wobei das Gehäuse eine mit der Referenzelektrode in Kontakt stehenden Referenzelektrolyten und einen abgeschlossenen Gasraum oberhalb des Referenzenelektrolyten umfasst und über den Auslauf eine elektrolytische Verbindung zwischen dem Referenzelektrolyten und einem Messmedium hergestellt wird.

Der Ausdruck "fluorhaltige Verbindung" steht dabei für eine chemische Verbindung, die mindestens ein Fluoratom enthält. Dabei kann es sich um ein kovalent, ein koordinativ oder um ein ionisch gebundenes Fluoratom handeln. Beispiele für ein ionisch gebundenes Fluoratom wären die Fluoratome etwa eines Fluoridsalzes, eines Fluorzinkats oder eines Fluoraluminats

Bevorzugt wird die fluorhaltige Verbindung aus der Gruppe bestehend aus mindestens einem Alkalimetallfluorid, einem Alkalihydrogenfluorid, einem Erdalkalimetallfluorid, einem Erdalkalihydrogenfluorid, einem Übergangsmetallfluorid, einem Fluorid eines Elements der dritten Hauptgruppe, einem Ammoniumfluorid, einem Alkalimetallfluoroaluminat, einem Erdalkalimetallfluoroaluminat, deren Hydrate, deren HF-Addukte sowie deren Mischungen ausgewählt. Mehr bevorzugt wird die fluorhaltige Verbindung aus der Gruppe bestehend aus KAlF₄, K₂AlF₅, K₃AlF₆, CsAlF₄, Cs₂AlF₅, Cs₃AlF₆, LiAlF₄, Li₂AlF₅, Li₃AlF₆, NaAlF₄, Na₂AlF₅, Na₃AlF₆, KBF₄, BaF₂, KHF₂, NH₄F, NH₄F₂, deren Hydrate, deren HF-Addukte sowie deren Mischungen, besonders bevorzugt aus der Gruppe bestehend aus KAlF₄, K₂AlF₅, K₃AlF₆, deren Hydrate sowie Mischungen enthaltend KAlF₄, K₂AlF₅, K₃AlF₆ und/oder deren Hydrate ausgewählt.

Speziell bevorzugt ist eine Mischung der chemischen Summenformel K₁₋₃AlF₄₋₆, die als Flussmittel Verwendung findet und unter dem Namen NOCOLOK^{®} von der Solvay Fluor GmbH hergestellt wird. In dieser speziellen Ausführungsform wird wässrige 5%ige bis 60%ige Flusssäure (HF), bevorzugt 20%ige bis 30%ige Flusssäure (HF) mit Aluminiumhydroxid zur Reaktion gebracht und die entstandene wässrige, Fluoraluminiumsäure enthaltende Lösung anschließend mit einer wässrigen Lösung von KOH versetzt, wobei es zu einer Fällung des gewünschten Produktes K₁₋₃AlF₄₋₆ kommt. Während der Zugabe der KOH-Lösung wird der pH-Wert mittels der elektrochemischen Messkette überprüft und die Zugabe der KOH-Lösung kann bezüglich der zugesetzten Menge so eingestellt werden, dass das entstehende Produkt reproduzierbar vorteilshafte Eigenschaften aufweist.

Entsprechend der vorstehend genannten speziellen Ausführungsform lassen sich auch die ebenfalls als Flussmittel und/oder als Produkte zum Flammlöten verwendbaren Produkte Cs₁₋₃AlF₄₋₆, durch Zugabe einer entsprechenden CsOH-Lösung; Na₁₋₃AlF₄₋₆, durch Zugabe einer entsprechenden NaOH-Lösung; und Li₁₋₃AlF₄₋₆, durch Zugabe einer entsprechenden LiOH-Lösung, herstellen. Wiederum wird während der Zugabe der Hydroxidlösung der pH-Wert mittels der elektrochemischen Messkette überprüft und die Zugabe so eingestellt, dass das entstehende Produkt reproduzierbar vorteilshafte Eigenschaften aufweist.

In einer weiteren speziellen Ausführungsform wird eine wässrige Lösung respektive Suspension von ZnO und HF hergestellt und anschließend unter pH-Kontrolle mit einer elektrochemischen Messkette mit einer wässrigen KOH-Lösung versetzt. Alternativ wird eine ZnO-Suspension vorgelegt und mit einer wässrigen KF-Lösung versetzt. Wiederum wird während der Zugabe der jeweils zweiten Lösung der pH-Wert mittels der elektrochemischen Messkette überprüft und die Zugabe so eingestellt, dass das entstehende Produkt KZnF₃ reproduzierbar vorteilshafte Eigenschaften aufweist.

In einer weiteren speziellen Ausführungsform wird eine wässrige Lösung respektive Suspension von BaCO₃ mit Flusssäure umgesetzt zu BaF₂, wobei der pH-Wert der Reaktionslösung mittels der elektrochemischen Messkette überprüft wird.

In einer weiteren speziellen Ausführungsform wird eine wässrige Ammoniak-Lösung mit Flusssäure umgesetzt zu NH₄F·HF, wobei der pH-Wert der Reaktionslösung mittels der elektrochemischen Messkette überprüft wird.

Der Ausdruck "Fällungsreaktion" steht dabei für eine chemische Reaktion, in dessen Verlauf sich die gewünschte chemische Verbindung bildet und zumindest teilweise entweder kontinuierlich im Verlauf der chemischen Reaktion aus dem Reaktionsmedium als Feststoff ausfällt oder im Anschluss an die chemische Reaktion, vorzugsweise ausgelöst durch eine weitere chemische und/oder physikochemische Manipulation, ausgefällt.

Die Fällungsreaktionen können beispielsweise in einem Temperaturbereich von -50 °C bis 250 °C durchgeführt werden. Bevorzugt werden sie von 0 bis 100 °C durchgeführt, besonders bevorzugt in einem Bereich von 10 bis 90 °C, speziell in einem Bereich von 80 bis 90 °C, bei Raumtemperatur, oder bei der Umgebungstemperatur.

Bevorzugt enthält das Reaktionsmedium zu Beginn der Fällungsreaktion Fluoridionen und man gibt während der Fällungsreaktion Hydroxydionen zum Reaktionsmedium. Ebenso bevorzugt enthält das Reaktionsmedium zu Beginn der Fällungsreaktion Hydroxydionen und man gibt während der Fällungsreaktion Fluoridionen zum Reaktionsmedium.

Der pH-Wert des Reaktionsmediums wird im Laufe der Fällungsreaktion mindestens einmal bestimmt. Bevorzugt wird der pH-Wert kontinuierlich mit Hilfe einer elektrochemischen Messkette überwacht. Ebenso bevorzugt wird der pH-Wert nach jeder erfolgten Zugabe eines Reaktionspartners und/oder diskontinuierlich zu gegebenen Zeitpunkten bestimmt.

Bevorzugt wird die Zugabe weiterer Mengen der Reaktionspartner während des Verlaufs der Fällungsreaktion durch den mit Hilfe der elektrochemischen Messkette bestimmten pH-Wert geregelt, das heißt, das Verfahren wird in einem sogenannten "closed loop"-Prozess gefahren. Dabei wird die weitere Zugabe mindestens eines Reaktionspartners automatisch durch den pH-Wert des Reaktionsmediums geregelt. Alternativ kann die Zugabe manuell in Abhängigkeit vom ermittelten pH-Wert erfolgen.

Der Ausdruck "Reaktionspartner" steht dabei für den oder die Reaktanten, die zur Reaktionslösung gegeben werden. Die Zugabe des Reaktionspartners kann dabei in Reinform geschehen, bevorzugt wird der Reaktionspartner als Lösung zugegeben, besonders bevorzugt in wässriger Lösung. Dabei kann es sich um eine einzelne chemische Verbindung handeln. Alternativ ist mit dem Ausdruck "Reaktionspartner" eine Mischung von mindestens zwei chemischen Verbindungen gemeint.

Ebenso bevorzugt wird die weitere Zugabe des Reaktionspartners beendet, sobald der durch die elektrochemische Messkette bestimmte pH-Wert einen Wert von 2.5 bis 7, bevorzugt 3.0 bis 5.0, mehr bevorzugt 3.5 bis 4.5, erreicht.

Durch die genaue Überwachung des pH-Wertes des Reaktionsmediums im Laufe der Fällungsreaktion können die hergestellten chemischen Verbindungen reproduktiv in neuen Qualitäten mit genau eingestellten chemischen und physikochemischen Eigenschaften hergestellt werden.

Die verwendete elektrochemische Messkette besteht im Allgemeinen aus zwei Elektroden, die vorzugsweise in einem Gehäuse baulich vereint sind. DE 10 2011 113 941 A1 beschreibt eine elektrochemische Messkette, die prinzipiell für Messungen in fluoridhaltigen Lösungen geeignet ist. Problematisch ist allerdings, dass durch das Diaphragma 14 in DE 10 2011 113 941 A1 Reaktionsmedium teilweise in den vom Elektrodengehäuse 1 umfassten Bereich eindringen kann. Dabei kann es zu einer chemischen Reaktion zwischen Komponenten des Elektrolyten, der mit der Gasdiffusionselektrode 8 in Kontakt steht, und Komponenten aus dem Reaktionsmedium kommen. Die Produkte dieser chemischen Reaktion können dann zu einer Verstopfung des Diaphragmas 14 führen. Des Weiteren kann durch das Eindringen des Reaktionsmediums der Messwert verfälscht werden. Entsprechend verwendet die vorliegende Erfindung eine elektrochemische Messkette enthaltend mindestens eine Wasserstoffgasdiffusionselektrode 7 als Indikatorelektrode und mindestens eine Referenzelektrode 8, wobei diese Elektroden eine konstruktive Einheit in einem Gehäuse 1 mit einem Auslauf 14 bilden und wobei das Gehäuse 1 einen mit der Referenzelektrode 8 in Kontakt stehenden Referenzelektrolyten 11 und einen abgeschlossenen Gasraum 19 oberhalb des Referenzelektrolyten 11 umfasst, und wobei über den Auslauf 14 eine elektrolytische Verbindung zwischen dem Referenzelektrolyten und einem Messmedium 9 hergestellt wird.

Durch den abgeschlossenen Gasraum 19 oberhalb des Referenzelektrolyten wird sichergestellt, dass kontinuierlich eine bestimmte Menge des Referenzelektrolyten 11 durch den Auslauf 14 austritt und so das Eindringen von Messmedium 9 durch den Auslauf 14 verhindert wird. Mindestens die Probleme wie oben für die Messkette aus DE 10 2011 113 941 A1 beschrieben werden damit gelöst und eine erhöhte Messgenauigkeit erreicht. Darüber hinaus wird erreicht, dass der Austritt an Referenzelektrolyt 11 durch den Auslauf 14 beispielsweise über den das in den Gasraum 19 gegebene Gasvolumen, das in der galvanischen Zelle 3 in der hermetisch abgeschlossenen Kammer 2 erzeugt wird und genau kontrolliert werden kann, so dass eine Kontamination des Messmedium 9, also beispielsweise des Reaktionsmediums des erfindungsgemäßen Verfahrens, genau bestimmt werden kann und somit minimiert werden kann.

Ein weiterer Vorteil der in der Erfindung genutzten elektrochemischen Messkette besteht darin, dass sie zur Messung des pH-Wertes in nicht-wässrigen Medien, beispielsweise in organischen Lösemitteln, sowie in flüssigen oder halbflüssigen Medien, wie sie in der Lebensmittelindustrie Verwendung finden, eingesetzt werden kann.

Das Gehäuse 1 besteht vorteilhafterweise aus einem Material, dass inert gegenüber den meisten Chemikalien ist. Vorteilhaft sind Kunststoffe wie PTFE, Teflon^{®}, PP, FEP, PFA, PEEK, PE, und PMMA. Der abgeschlossene Gasraum 19 befindet sich über dem Referenzelektrolyten 11 innerhalb des Gehäuses 1. Der Begriff "abgeschlossen" bedeutet dabei, dass sich im Gasraum vorteilhaft ein bestimmter Druck, beispielsweise ein gegenüber dem Umgebungsdruck leicht erhöhter Druck, einstellen kann. Dennoch kann der Teil des Gehäuses 1, der den Gasraum 19 abschließt, selbstverständlich Öffnungen enthalten, die allerdings während des Messvorgangs verschlossen sind, wodurch der Gasraum wiederum abgeschlossen ist. Beispielsweise kann das Gehäuse 1 Öffnungen für eine Zufuhr von Referenzelektrolyt, für eine Füllstandsanzeige und/oder - kontrolle, für ein Überdruckventil oder für Messinstrumente im Gehäuse 1 haben. Die Wasserstoffgasdiffusionselektrode 7 steht im Kontakt mit dem Messmedium und dient als Indikatorelektrode. Sie wird über mindestens eine Wasserstoff entwickelnde Zelle 3, beispielsweise nach DE 3532335, die sich in Kammer 2 befinden, durch Gasaustrittsöffnung 5 und eine dünne Bohrung 6 mit Wasserstoff versorgt. Damit die mindestens eine Wasserstoff entwickelnde Zelle 3 kontrolliert arbeiten kann, wird diese über mindestens einen Widerstand 4 entladen. Die abgeschlossene Kammer 2 verhindert dabei, dass Luftsauerstoff zutritt, bzw. Wasserstoff unkontrolliert entweicht. Alternativ kann beispielsweise über einen Massenflussregler eine kontrollierte Menge Wasserstoff in die Kammer 2 eingespeist werden. Das sich an der Elektrode 7 einstellende Potential wird beispielsweise über einen Palladiumdraht zum Kontakt 10 weitergeleitet. Die gemessene Potentialdifferenz (in mV) dient zur Umrechnung in einen pH Wert. Die elektrochemische Messkette kann vorteilhaft in Systemen verwendet werden, in denen die Fluorid Konzentration mehr als 1 Gew.%, mehr als 5 Gew.%, mehr als 10 Gew.% oder gar mehr als 20 Gew.%, wie beispielsweise 50 Gew.%, beträgt. Die elektrochemische Messkette zeichnet sich insbesondere auch dadurch aus, dass sie auch bei einer Fluorid Konzentration, die mehr als 1 Gew.%, mehr als 5 Gew.%, mehr als 10 Gew.% oder gar mehr als 20 Gew.%, wie beispielsweise 50 Gew.%, beträgt, verlässliche Messergebnisse liefert. Verlässliche Messergebnisse können insbesondere bei oben genannten Fluoridkonzentrationen und hohen Temperaturen, wie etwa größer oder gleich 40°C, größer oder gleich 50°C, größer oder gleich 60°C oder sogar größer oder gleich 70°C erzielt werden, ohne dass die Messkette nennenswert angegriffen wird. Unter diesen Bedingungen können bekannte elektrochemische Messketten nicht operieren, insbesondere nicht als Messkette zur Überwachung des pH Wertes innerhalb eines chemischen Prozesses unter industriellen Bedingungen. Wird die Messkette bei chemischen Fällungsreaktionen zur Herstellung von fluorhaltigen Verbindungen eingesetzt, werden diese bevorzugt bei Temperaturen von 0 bis 100 °C durchgeführt, besonders bevorzugt in einem Bereich von 10 bis 90 °C, speziell in einem Bereich von 80 bis 90 °C, bei Raumtemperatur, oder bei der Umgebungstemperatur.

Die elektrochemische Messkette umfasst weiterhin mindestens eine Referenzelektrode 8, die mit dem Referenzelektrolyten 11 in Kontakt steht. Das sich an der Elektrode 8 einstellende Potential wird beispielsweise über einen Palladiumdraht zum Kontakt 13 weitergeleitet. Alternativ umfasst die elektrochemische Messkette zwei oder weitere Referenzelektroden. Bevorzugt ist mindestens eine Referenzelektrode eine Wasserstoffgasdiffusionselektrode 8 mit dem Kontakt 13 oder eine Ag/AgCl-Elektrode umfassend einen Ag-Draht 18 und eine AgCl-Schicht 17 mit dem Kontakt 12. Besonders bevorzugt ist eine Wasserstoffgasdiffusionselektrode 8. Ebenfalls bevorzugt umfasst die elektrochemische Messkette jeweils eine Wasserstoffgasdiffusionselektrode und eine Ag/AgCl-Elektrode, die beide mit dem Referenzelektrolyten 11 in Kontakt stehen. Gemäß Erfindung wird über den Auslauf 14 eine elektrolytische Verbindung zwischen dem Referenzelektrolyten 11 und dem Messmedium 9 hergestellt. Dabei kann es sich bei dem Auslauf 14 um ein oder mehrere Diaphragmen, einen oder mehrere Ringspalte oder ein oder mehrere Löcher handeln.

Weiterhin vorteilhaft umfasst das Gehäuse 1 jeweils einen Temperatursensor 15 mit jeweils einem Anschluss 16, wobei ein Sensor mit dem Messmedium und ein Sensor mit dem Referenzelektrolyten in Kontakt steht. Damit eine Auswertung der Messungen der elektrochemischen Messkette nach dem Nernst'schen Gesetz möglich ist, sollten möglichst alle relevanten Bauteile (Indikatorelektrode, Referenzelektrode) möglichst wenig unterschiedliche und vor allem bekannte Temperaturen aufweisen. Ist dies nicht der Fall, können erhebliche Abweichungen zwischen der gemessenen Spannung in Millivolt und dem daraus errechneten pH-Wert erfolgen. Entsprechend umfasst das Gehäuse vorteilhaft einen Wärmeüberträger, der die Temperatur des Referenzelektrolyten 11 und/oder des Gehäuses 1 regulieren kann. Im einfachsten Falle handelt es sich bei dem Wärmeüberträger um eine Heizspirale, eine Kühlung (z.B. Peltier-Element) oder eine kombinierte Kühl/Heizspirale, die in den Referenzelektrolyten 11 taucht.

Der Referenzelektrolyt ist bevorzugt eine wässrige Lösung mindestens eines Metallsalzes. Besonders bevorzugt sind wässrige Lösungen von Halogenmetallsalzen der ersten oder zweiten Hauptgruppe des Periodensystems, wie beispielsweise eine wässrige KCl oder CsCl Lösung.

Weiterhin vorteilhaft umfasst das Gehäuse 1 einen oder mehrere Füllstandsanzeiger, die die enthaltende Menge an Referenzelektrolyten 11 anzeigen. Der Füllstandsanzeiger kann dabei unter anderem rein optischer Natur in Form eines Sichtfensters, fotooptischer Natur, mechanischer Natur, akustischer Natur oder elektronischer Natur beispielsweise durch Messung des Widerstands sein. Dadurch kann die Füllmenge an Referenzelektrolyten 11 manuell oder automatisch in Abhängigkeit vom Ergebnis des Füllstandsanzeigers geregelt werden, so dass ein Trockenfallen der mindestens einen Referenzelektrode verhindert wird.

### Bezugszeichenliste

1 (stabförmiges) Gehäuse
2 abgeschlossene Kammer
3 galvanische Zelle
4 Widerstand
5 Gasaustrittsöffnung
6 dünne Bohrung
7 Wasserstoffgasdiffusionselektrode als Indikatorelektrode
8 Wasserstoffgasdiffusionselektrode als Referenzelektrode
9 Messmedium
10 Kontakt
11 Referenzelektrolyt
12 Kontakt Ag/AgCl Elektrode
13 Kontakt Wasserstoffgasdiffusionselektrode
14 Auslauföffnung
15 Temperatursensoren
16 elektrische Anschlüsse
17 AgCl-Schicht auf Ag/AgCl-Referenzelektrode
18 Ag-Draht der Ag/AgCl-Referenzelektrode
19 abgeschlossener Gasraum oberhalb 11

### Ausführungsbeispiele

### Beispiel 1 - Herstellung eines Lotflussmittels

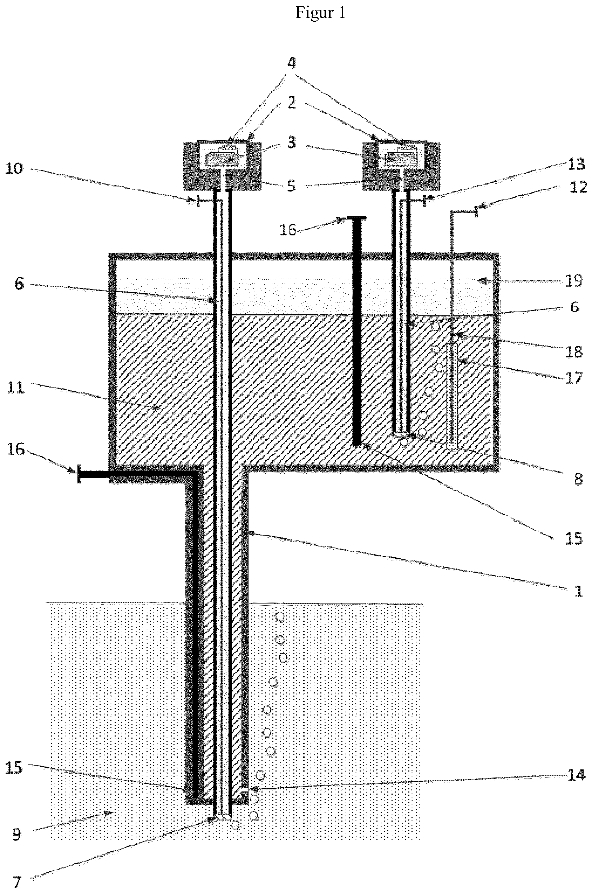

614 kg Fluorwasserstoff in Form einer 20 Gew.-% Fluorwasserstoff enthaltenden Flusssäure und 550 kg Aluminiumhydroxid (Reinheitsgrad 99 %) werden zur Bildung von Fluoraluminiumsäure in einem gerührten Reaktor ausgestattet mit der elektrochemischen Messkette nach Abbildung 1 zur Umsetzung gebracht. Bei einer Temperatur von 80 °C im Reaktor sowie einer Temperatur von 50°C im Referenzelektrolyten 11, der Referenzelektrolyt 11bestehend aus einer wässrigen KCl Lösung, wird in die erhaltene Reaktionsmischung eine 15 Gew.-% KOH enthaltende Kalilauge eingegeben, die durch Auflösung von 550 kg KOH erhalten wurde. Es bildet sich eine Suspension von ausfallenden Kaliumsalzen von komplexen Aluminiumfluoriden. Während der Zugabe an Kalilauge wird der pH-Wert kontinuierlich mit Hilfe der elektrochemischen Messkette überwacht und die Zugabe an Kalilauge wird beim Erreichen eines pH Wertes von 4.0 beendet. Das entstandene Produkt wird filtriert und der filterfeuchte Rückstand in einem Stromtrockner bei 570 °C getrocknet. Das beschriebene Verfahren führt dabei zu einer vorteilhaften Filtrierbarkeit der Suspension sowie höherer Ausbeute und Reinheit des entstehenden Produkts. Des Weiteren führt das Verfahren zu einer Einsparung an Flusssäure und Kalilauge, da die Zugaben an Flusssäure und Kalilauge punktgenau beendet werden können und es weder zu einem Unterfahren noch zu einem Überfahren der Produktion kommt.

### Beispiel 2 - Herstellung eines Lotflussmittels

614 kg Fluorwasserstoff in Form einer 50 Gew.-% Fluorwasserstoff enthaltenden Flusssäure und 550 kg Aluminiumhydroxid (Reinheitsgrad 99 %) werden zur Bildung von Fluoraluminiumsäure in einem gerührten Reaktor zur Umsetzung gebracht. Der gerührte Reaktor ist ausgestattet mit einem Bypass, der mit einer elektrochemischen Messkette nach Abbildung 1 ausgerüstet ist und durch den mittels einer Pumpe das Reaktionsgemisch aus dem gerührten Reaktor entnommen und nach Vermessen mittels der besagten elektrochemischen Messkette nach Abbildung 1 wieder in den gerührten Reaktor entlassen wird. Bei einer Temperatur von 80 °C im Bypass sowie im gerührten Reaktor sowie einer Temperatur von 50°C im Referenzelektrolyten 11, der Referenzelektrolyt bestehend aus einer wässrigen KCl Lösung, wird in die erhaltene Reaktionsmischung eine 15 Gew.-% KOH enthaltende Kalilauge eingegeben, die durch Auflösung von 550 kg KOH erhalten wurde. Es bildet sich eine Suspension von ausfallenden Kaliumsalzen von komplexen Aluminiumfluoriden. Während der Zugabe an Kalilauge wird der pH-Wert kontinuierlich mit Hilfe der elektrochemischen Messkette überwacht und die Zugabe an Kalilauge wird beim Erreichen eines pH Wertes von 4.5 beendet. Das entstandene Produkt wird filtriert und der filterfeuchte Rückstand in einem Stromtrockner bei 570 °C getrocknet. Das beschriebene Verfahren führt dabei zu einer vorteilhaften Filtrierbarkeit der Suspension sowie höherer Ausbeute und Reinheit des entstehenden Produkts. Des Weiteren führt das Verfahren zu einer Einsparung an Flusssäure und Kalilauge, da die Zugaben an Flusssäure und Kalilauge punktgenau beendet werden können und es weder zu einem Unterfahren noch zu einem Überfahren der Produktion kommt. Die Verwendung eines Bypass führt überdies zu einer deutlich kleineren Bauform der elektrochemischen Messkette nach Abbildung 1.

## Patentansprüche

1. Ein Verfahren zur Herstellung einer fluorhaltigen Verbindung
durch eine Fällungsreaktion dadurch charakterisiert, dass die fluorhaltige Verbindung aus einem Reaktionsmedium gefällt wird und dass man während des Verlaufs der Fällungsreaktion den pH-Wert des Reaktionsmediums mit Hilfe einer elektrochemischen Messkette bestimmt, wobei die elektrochemische Messkette eine elektrochemische Messkette enthaltend eine Wasserstoffgasdiffusionselektrode 7 als Indikatorelektrode und mindestens eine Referenzelektrode ist, wobei die Elektroden eine konstruktive Einheit mit einem Gehäuse 1 mit einem Auslauf 14 bilden, wobei das Gehäuse 1 einen mit der Referenzelektrode in Kontakt stehenden Referenzelektrolyten 11 und einen abgeschlossenen Gasraum 19 oberhalb des Referenzelektrolyten 11 umfasst und wobei über den Auslauf 14 eine elektrolytische Verbindung zwischen dem Referenzelektrolyten und einem Messmedium 9 hergestellt wird.

2. Das Verfahren nach Anspruch 1 wobei die fluorhaltige
Verbindung ausgewählt wird aus der Gruppe bestehend aus mindestens einem Alkalimetallfluorid, einem Alkalihydrogenfluorid, einem Erdalkalimetallfluorid, einem Erdalkalihydrogenfluorid, einem Übergangsmetallfluorid, einem Fluorid eines Elements der dritten Hauptgruppe, einem Ammoniumfluorid, einem Alkalimetallfluoroaluminat, einem Erdalkalimetallfluoroaluminat, deren Hydrate, deren HF-Addukte sowie deren Mischungen.

3. Das Verfahren nach Anspruch 1 oder 2 wobei die fluorhaltige
Verbindung ausgewählt wird aus der Gruppe bestehend aus KAlF₄, K₂AlFs, K₃AlF₆, CsAlF₄, CS₂AlF₅, Cs₃AlF₆, LiAlF4, Li₂AlF₅, Li₃AlF₆, NaAlF₄, Na₂AlF₅, Na₃AlF₆, KBF₄, BaF₂, KHF₂, NH4F, NH₄F₂, deren Hydrate, deren HF-Addukte sowie deren Mischungen, bevorzugt aus der Gruppe bestehend aus KAlF₄, K₂AlF₅, K₃AlF₆, deren Hydrate sowie Mischungen enthaltend KAlF₄, K₂AlF₅, K₃AlF₆ und/oder deren Hydrate.

4. Das Verfahren nach einem der Ansprüche 1 bis 3 wobei das
Reaktionsmedium zu Beginn der Fällungsreaktion Fluoridionen enthält und man während der Fällungsreaktion Hydroxydionen zum Reaktionsmedium gibt.

5. Das Verfahren nach einem der Ansprüche 1 bis 3 wobei das
Reaktionsmedium zu Beginn der Fällungsreaktion Hydroxydionen enthält und man während der Fällungsreaktion Fluoridionen zum Reaktionsmedium gibt.

6. Das Verfahren nach einem der Ansprüche 1 bis 4 wobei die
fluorhaltige Verbindung ausgewählt wird aus der Gruppe bestehend aus KAlF₄, K₂AlF₅, K₃AlF₆, deren Hydrate sowie Mischungen enthaltend KAlF₄, K₂AlF₅, K₃AlF₆ und/oder deren Hydrate, das Reaktionsmedium zu Beginn der Fällungsreaktion Fluoraluminiumsäure enthält und die Fällungsreaktion durch Zugabe einer wässrigen Kaliumhydroxid-Lösung zum Reaktionsmedium bewirkt wird.

7. Das Verfahren nach einem der Ansprüche 1 bis 6 wobei die
Zugabe des Reaktionspartners beendet wird sobald der durch die elektrochemische Messkette bestimmte pH-Wert im Reaktionsmedium einen Wert von 2.5 bis 7, bevorzugt 3.0 bis 5.0, mehr bevorzugt 3.5 bis 4.5, erreicht.

8. Das Verfahren nach einem der Ansprüche 1 bis 7 wobei die
Zugabe des Reaktionspartners während des Verlaufs der Fällungsreaktion durch den mit Hilfe der elektrochemischen Messkette bestimmten pH-Wert im Reaktionsmedium geregelt wird.

9. Verfahren nach einem der Ansprüche 1 bis 8, wobei mindestens eine Referenzelektrode der elektrochemischen Messkette eine Wasserstoffgasdiffusionselektrode 8 oder ein Ag/AgCl-Elektrode 17 umfasst, bevorzugt eine Wasserstoffgasdiffusionselektrode 8.

10. Verfahren nach einem der Ansprüche 1 bis 9, wobei das Gehäuse 1 der elektrochemischen Messkette einen Temperatursensor 15, der mit dem Referenzelektrolyten 11 in Kontakt steht, und einen Temperatursensor 15, der mit dem Messmedium 9 in Kontakt steht umfasst.

11. Verfahren nach einem der Ansprüche 1 bis 10, wobei die elektrochemische Messkette eine Wasserstoffgasdiffusions-Referenzelektrode 8 und eine Ag/AgCl-Referenzelektrode 8 umfasst.

12. Verfahren nach einem der Ansprüche 1 bis 11, wobei die Temperatur des Referenzelektrolyten der elektrochemischen Messkette mittels eines Wärmeüberträgers geregelt werden kann.

## Claims

1. A process for producing a fluorine-containing compound by a precipitation reaction, **characterized in that** the fluorine-containing compound is precipitated from a reaction medium and **in that** during the course of the precipitation reaction the pH value of the reaction medium is determined using an electrochemical measuring chain, wherein the electrochemical measuring chain is an electrochemical measuring chain containing a hydrogen gas diffusion electrode 7 as an indicator electrode and at least one reference electrode, wherein the electrodes form a constructional unit with a housing 1 having an outlet 14, wherein the housing 1 comprises a reference electrolyte 11 in contact with the reference electrode and a sealed-off gas space 19 above the reference electrolyte 11 and wherein an electrolytic connection between the reference electrolyte and a measurement medium 9 is produced via the outlet 14.

2. The process according to Claim 1 wherein the fluorine-containing compound is selected from the group consisting of at least one alkali metal fluoride, an alkali metal hydrogenfluoride, an alkaline earth metal fluoride, an alkaline earth metal hydrogenfluoride, a transition metal fluoride, a fluoride of an element of the third main group, an ammonium fluoride, an alkali metal fluoroaluminate, an alkaline earth metal fluoroaluminate, hydrates thereof, HF adducts thereof and mixtures thereof.

3. The process according to Claim 1 or 2 wherein the fluorine-containing compound is selected from the group consisting of KAlF₄, K₂AlF₅, K₃AlF₆, CsAlF₄, Cs₂AlF₅, Cs₃AlF₆, LiAlF₄, Li₂AlF₅, Li₃AlF₆, NaAlF₄, Na₂AlF₅, Na₃AlF₆, KBF₄, BaF₂, KHF₂, NH₄F, NH₄F₂, hydrates thereof, HF adducts thereof and mixtures thereof, preferably from the group consisting of KAlF4, K₂AlF₅, K₃AlF₆, hydrates thereof and mixtures containing KAlF₄, K₂AlF₅, K₃AlF₆ and/or hydrates thereof.

4. The process according to any of Claims 1 to 3 wherein the reaction medium contains fluoride ions at commencement of the precipitation reaction and hydroxide ions are added to the reaction medium during the precipitation reaction.

5. The process according to any of Claims 1 to 3 wherein the reaction medium contains hydroxide ions at commencement of the precipitation reaction and fluoride ions are added to the reaction medium during the precipitation reaction.

6. The process according to any of Claims 1 to 4 wherein the fluorine-containing compound is selected from the group consisting of KAlF₄, K₂AlF₅, K₃AlF₆, hydrates thereof and mixtures containing KAlF₄, K₂AlF₅, K₃AlF₆ and/or hydrates thereof, the reaction medium contains fluoroaluminic acid at commencement of the precipitation reaction and the precipitation reaction is effected by addition of an aqueous potassium hydroxide solution to the reaction medium.

7. The process according to any of Claims 1 to 6 wherein the addition of the reaction partner is terminated as soon as the pH value in the reaction medium determined by the electrochemical measuring chain achieves a value of 2.5 to 7, preferably 3.0 to 5.0, more preferably 3.5 to 4.5.

8. The process according to any of Claims 1 to 7 wherein the addition of the reaction partner during the course of the precipitation reaction is controlled by the pH value in the reaction medium determined using the electrochemical measuring chain.

9. Process according to any of Claims 1 to 8, wherein at least one reference electrode of the electrochemical measuring chain comprises a hydrogen gas diffusion electrode 8 or an Ag/AgCl electrode 17, preferably a hydrogen gas diffusion electrode 8.

10. Process according to any of Claims 1 to 9, wherein the housing 1 of the electrochemical measuring chain comprises a temperature sensor 15 in contact with the reference electrolyte 11 and a temperature sensor 15 in contact with the measurement medium 9.

11. Process according to any of Claims 1 to 10, wherein the electrochemical measuring chain comprises a hydrogen gas diffusion reference electrode 8 and an Ag/AgCl reference electrode 8.

12. Process according to any of Claims 1 to 11, wherein the temperature of the reference electrolyte of the electrochemical measuring chain may be controlled by means of a heat transferrer.

## Revendications

1. Procédé de préparation d'un composé fluoré par une réaction de précipitation, **caractérisé en ce que** le composé fluoré est précipité à partir d'un milieu de réaction et **en ce qu'**on détermine, pendant l'évolution de la réaction de précipitation, la valeur du pH du milieu de réaction à l'aide d'une électrode électrochimique, l'électrode électrochimique étant une électrode électrochimique contenant une électrode de diffusion d'hydrogène gazeux 7 en tant qu'électrode indicatrice et au moins une électrode de référence, les électrodes formant une unité constructive présentant un boîtier 1 pourvu d'une sortie 14, le boîtier 1 comprenant un électrolyte de référence 11 en contact avec l'électrode de référence et un espace gazeux fermé 19 au-dessus de l'électrolyte de référence 11 et un composé électrolytique étant préparé entre l'électrolyte de référence et un milieu de mesure 9 par l'intermédiaire de la sortie 14.

2. Procédé selon la revendication 1, le composé fluoré étant choisi dans le groupe constitué par au moins un fluorure de métal alcalin, un hydrogénofluorure alcalin, un fluorure de métal alcalino-terreux, un hydrogénofluorure alcalino-terreux, un fluorure de métal de transition, un fluorure d'un élément du troisième groupe principal, un fluorure d'ammonium, un fluoroaluminate de métal alcalin, un fluoroaluminate de métal alcalino-terreux, leurs hydrates, leurs produits d'addition de HF ainsi que leurs mélanges.

3. Procédé selon la revendication 1 ou 2, le composé fluoré étant choisi dans le groupe constitué par KAlF₄, K₂AlF₅, K₃AlF₆, CsAlF₄, Cs₂AlF₅, Cs₃AlFₑ, LiAlF₄, Li₂AlF₅, Li₃AlF₆, NaAlF₄, Na₂AlF₅, Na₃AlF₆, KBF₄, BaF₂, KHF₂, NH₄F, NH₄F₂, leurs hydrates, leurs produits d'addition de HF ainsi que leurs mélanges, de préférence dans le groupe constitué par KAlF4, K₂AlF₅, K₃AlF₆, leurs hydrates ainsi que les mélanges contenant KAlF₄, K₂AlF₅, K₃AlF₆ et/ou leurs hydrates.

4. Procédé selon l'une des revendications 1 à 3, le milieu de réaction contenant, au début de la réaction de précipitation, des ions fluorure et des ions hydroxy étant ajoutés au milieu de réaction pendant la réaction de précipitation.

5. Procédé selon l'une des revendications 1 à 3, le milieu de réaction contenant, au début de la réaction de précipitation, des ions hydroxy et des ions fluorure étant ajoutés au milieu de réaction pendant la réaction de précipitation.

6. Procédé selon l'une des revendications 1 à 4, le composé fluoré étant choisi dans le groupe constitué par KAlF₄, K₂AlF₅, K₃AlF₆, leurs hydrates ainsi que les mélanges contenant KAlF₄, K₂AlF₅, K₃AlF₆ et/ou leurs hydrates, le milieu de réaction contenant, au début de la réaction de précipitation, de l'acide fluoroaluminique et la réaction de précipitation étant provoquée par ajout d'une solution aqueuse d'hydroxyde de potassium au milieu de réaction.

7. Procédé selon l'une des revendications 1 à 6, l'ajout du partenaire de réaction étant arrêté dès que la valeur du pH déterminée par l'électrode électrochimique dans le milieu de réaction atteint une valeur de 2,5 à 7, de préférence de 3,0 à 5,0, plus préférablement de 3,5 à 4,5.

8. Procédé selon l'une des revendications 1 à 7, l'ajout du partenaire de réaction pendant l'évolution de la réaction de précipitation étant régulé par la valeur de pH déterminée à l'aide de l'électrode électrochimique dans le milieu de réaction.

9. Procédé selon l'une des revendications 1 à 8, au moins une électrode de référence de l'électrode électrochimique comprenant une électrode de diffusion d'hydrogène gazeux 8 ou une électrode Ag/AgCl 17, de préférence une électrode de diffusion d'hydrogène gazeux 8.

10. Procédé selon l'une des revendications 1 à 9, le boîtier 1 de l'électrode électrochimique comprenant un capteur de température 15 qui est en contact avec l'électrolyte de référence 11 et un capteur de mesure 15 qui est en contact avec le milieu de mesure 9.

11. Procédé selon l'une des revendications 1 à 10, l'électrode électrochimique comprenant une électrode de diffusion d'hydrogène gazeux 8 de référence et une électrode Ag/AgCl 8 de référence.

12. Procédé selon l'une des revendications 1 à 11, la température de l'électrolyte de référence de l'électrode électrochimique pouvant être régulée au moyen d'un agent caloporteur.
